# EUROPÄISCHE PATENTANMELDUNG

(11) **EP 0 724 902 A1**
(43) Veröffentlichungstag der Anmeldung: **07.08.1996**
(21) Anmeldenummer: 96100961.0
(22) Anmeldetag: 24.01.1996
(51) Int. Cl.: B01D 21/00, B01D 21/24, B01D 21/26

(54) **Verfahren zur Klärung von u.a. mit mineralischen Bestandteilen verschmutzten Abwässern**

(30) Priorität: 01.02.1995 DE 19503120
(71) Anmelder: PASSAVANT-WERKE AG, D-65322 Aarbergen (DE)
(72) Erfinder: Schönborn, Hubert, Dipl.-Ing., 65326 Aarbergen (DE); Söhngen, Karl-Hermann, Dipl.-Ing., 65582 Diez (DE)

(57) **Zusammenfassung**

Bei der Mischkanalisation von Regen- und Abwässern treten im Abwasser gemeinsam organische und mineralische Schmutzstoffe auf, die in den Einlauf der Kläranlage gelangen. Die mineralischen Stoffe (vor allem Sand) werden üblicherweise im Sandfang der Kläranlage zurückgehalten. Wegen der Vermischung des Sands mit organischen Bestandteilen muß der Sand nach der Entnahme aus dem Sandfang gewaschen werden. Die ausgewaschenen organischen Stoffe werden mit dem Abwasser der Vorklärstufe zugeleitet. Um diesen Aufwand in Zukunft zu verringern, wird erfindungsgemäß vorgeschlagen, den Sandfang und die Sandwaschstufe fortzulassen und das Abwasser nach Passieren des Rechens direkt in die mechanische Vorklärstufe zu leiten. Der Sand kann dann aus dem Vorklärschlamm abgetrennt werden, z.B durch Flotation oder während des Druckluftheberns.

## Beschreibung

Die Erfindung bezieht sich auf die Klarung von Abwässern, die außer mit Schmutzstoffen organischen Ursprungs mit mineralischen Bestandteilen, also insbesondere Sand, befrachtet sind. Derartige Abwässer fallen überwiegend im kommunalen Bereich an und werden vorzugsweise biologisch gereinigt.

Mineralische Bestandteile gelangen vor allem über die Hof-, Dach- und Straßenentwässerung in die Mischkanalisation und über den Hauptsammler in die Kläranlage. Dort wird der Sand üblicherweise in einem Längs- oder Rundsandfang doch Sedimentation zurückgehalten. Wenn mit dem Sand auch größere Mengen organischer Schmutzstoffe ausgetragen werden, dann muß das Gemisch auch noch gewaschen werden, um einen deponiefähigen Sand zu erhalten. Die Sandwaschstufe stellt eine weitere Komplizierung und Aufwandserhöhung mit erhöhten Betriebskosten dar.

Die Aufgabe, die Abtrennung der mineralischen Bestandteile aufwands- und kostenmäßig zu vereinfachen, wird erfindungsgemäß dadurch gelöst, daß das Abwasser der Vorklärstufe unbehandelt zugeführt wird und die mineralischen Bestandteile aus dem aus der Vorklärstufe abgezogenen Vorklärschlamm abgetrennt werden. Die teure und aufwendige Sandabtrennstufe kann also ganz entfallen. Da der Vorklärschlamm nur 1 bis 2% des Anlagendurchsatzes ausmacht, ist die Abtrennung der mineralischen Bestandteile im Vergleich mit der von der ganzen Abwassermenge beaufschlagten Sandfangstufe wesentlich vereinfacht. Außerdem ist der Sandanfall durch die Pufferung in der Vorklärstufe vergleichmäßigt.

Die Abtrennung der mineralischen Bestandteile wird vorzugsweise durch Flotation der organischen Schmutzstoffe beim Abfördern des Vorklärschlamms vorgenommen. Hierfür eignen sich vor allem Drucklufthebeeinrichtungen, also sog. Mammutpumpen. Die die Hochförderung bewirkenden Luftblasen üben auf das geförderte Gemisch eine Waschwirkung aus, Als Alternative zur Abtrennung während der Hochförderung kommt eine besondere Abtrennstufe in Form eines Hydrozyklons oder einer Absetzkammer in Frage, die in den Förderweg des Vorklärschlamms eingefügt sind. In dem Hydrozyklon wirkt die Zentrifugalkraft unterstützend auf die Abtrennung der spezifisch dichteren mineralischen Bestandteile.

Der Vorteil der erfindungsgemäß neuen Verfahrensführung ist neben der Kosten- und Bauflächeneinsparung darin zu sehen, daß das Abwasser wegen des Fehlens der Belüftung in einer belüfteten Sandfangstufe jetzt sauerstoffarm ist, was sich positiv auf die Rücklösung von gebundenen Phosphaten in einer der Vorklärstufe nachgeschalteten Stufe zur biologischen Entphosphatierung auswirkt.

## Patentansprüche

1. Verfahren zur Klärung von mit mineralischen Bestandteilen, wie z.B. Sand, verschmutzten Abwässern, die auch absetzbare Schmutzstoffe organischen Ursprungs enthalten, durch Sedimentation in einer Vorklästufe, **dadurch gekennzeichnet**, daß das Abwasser der Vorklärstufe unbehandelt zugeführt wird und die mineralischen Bestandteile aus dem aus der Vorklärstufe abgezogenen Vorklärschlamm abgetrennt werden,

2. Verfahren nach Anspruch 1, **dadurch gekennzeichnet**, daß die mineralischen Bestandteile durch Flotation der organischen Bestandteile aus dem Vorklärschlamm abgetrennt werden.

3. Verfahren nach Anspruch 1, **dadurch gekennzeichnet**, daß die Abtrennung während der Abförderung des Vorklärschlamms durch Druckluftheben (sog. Mammutpumpen) erfolgt.

4. Verfahren nach Anspruch 1, **dadurch gekennzeichnet**, daß die Abtrennung in einer dem Schlammabzug nachgeschalteten Trennstufe erfolgt.

5. Verfahtren nach Anspruch 4, **dadurch gekennzeichnet**, daß die Abtrennung in der Trennstufe durch Verwirbelung vorgenommen wird, die das Absetzen der mineralischen Bestandteile noch zuläßt.

6. Verfahren nach Anspruch 4 oder 5, **dadurch gekennzeichnet**, daß die Abtrennung in der Trennstufe durch Zentrifugalkraft in einer Spiralströmung unterstützt wird.
